# EUROPEAN PATENT APPLICATION

(11) **EP 4 509 468 A1**
(43) Date of publication of application: **19.02.2025**
(21) Application number: 23788086.9
(22) Date of filing: 09.03.2023
(51) Int. Cl.: C02F 3/06, C02F 3/10, C02F 3/12

(54) **METHOD FOR CLEANING ORGANIC WASTE WATER TREATMENT APPARATUS**

(30) Priority: 15.04.2022 JP 2022067958
(71) Applicant: Metawater Co., Ltd., Tokyo 101-0041 (JP); The University of Kitakyushu, Kitakyushu-shi, Fukuoka 802-8577 (JP)
(72) Inventor: YANASE, Tetsuya, Tokyo 101-0041 (JP); YASUI, Hidenari, Kitakyushu-shi, Fukuoka 808-0135 (JP); TERASHIMA, Mitsuharu, Kitakyushu-shi, Fukuoka 808-0135 (JP)
(74) Representative: FDST Patentanwälte
(86) International application number: PCT/JP2023/009152
(87) International publication number: WO 2023/199664

(57) **Abstract**

A method includes: stopping the supply of the oxygen to the membrane support; pushing a chemical solution that cleans the plurality of holes from a lower end of the membrane support to inside of the membrane support; pushing water or first air that pushes out the chemical solution inside the plurality of holes to a side of the reaction tank from the lower end to the inside of the membrane support; performing closing control of a valve that controls an amount of air to be discharged from an upper end of the membrane support; and pushing second air to dry the inside of the plurality of holes by pushing out the water or the first air inside the plurality of holes to the side of the reaction tank from the lower end to the inside of the membrane support.

## Description

### TECHNICAL FIELD

The present disclosure relates to a method for cleaning an organic waste water treatment apparatus.

### BACKGROUND ART

As a method for removing contaminants contained in waste water (hereinafter, also simply referred to as contaminants) by a treatment apparatus that treats organic waste water (hereinafter, also simply referred to as waste water) such as sewage, an activated sludge method is used, in which organic substances are decomposed by microorganisms (hereinafter, also referred to as activated sludge) propagated in a reaction tank, for example. The contaminants are, for example, organic substances, floating substances, and the like (hereinafter, also simply referred to as organic substances or substrates) (see Patent Literature 1).

### CITATION LIST

### PATENT LITERATURE

Patent Literature 1: Japanese Patent Application Laid-Open No. 2021-079335

### SUMMARY OF INVENTION

### PROBLEMS TO BE SOLVED BY THE INVENTION

For the organic waste water treatment apparatus as described above, a cleaning method that causes a contaminant removing ability to last has been desired.

According to an aspect of the embodiments, a method for cleaning an organic waste water treatment apparatus including a tank and a supplier that supplies at least oxygen, the tank including a pipe-shaped membrane support that allows molecular diffusion of the oxygen supplied by the supplier into the tank via a plurality of holes, the method includes: stopping the supply of the oxygen to the membrane support; supplying a chemical solution from a first portion of the membrane support to inside of the membrane support; supplying a liquid or a first gas from the first portion to the inside of the membrane support; reducing a degree of opening of a valve that controls an amount of gas to be discharged from a second portion of the membrane support; and supplying a second gas from the first portion to the inside of the membrane support.

### ADVANTAGEOUS EFFECT OF THE INVENTION

According to the method for cleaning an organic waste water treatment apparatus in the aspect of the present disclosure, it is possible to cause a contaminant removing ability to last.

### BRIEF DESCRIPTION OF DRAWINGS

Fig. 1 is a diagram for explaining a configuration of an organic waste water treatment apparatus 800 according to a first comparative example.
Fig. 2 is a diagram for explaining a configuration of an organic waste water treatment apparatus 900 according to a second comparative example.
Fig. 3 is a diagram for explaining a configuration of an organic waste water treatment apparatus 100 according to a first embodiment.
Fig. 4 is a vertical sectional view for explaining a configuration of a membrane support 72 according to the first embodiment.
Fig. 5 is a vertical sectional view for explaining the configuration of the membrane support 72 according to the first embodiment.
Fig. 6 is a diagram for explaining an effect in the first embodiment.
Fig. 7 is a diagram for explaining the effect in the first embodiment.
Fig. 8 is a diagram for explaining the effect in the first embodiment.
Fig. 9 is a diagram for explaining a configuration of a reaction tank 70 according to a first modification.
Fig. 10 is a diagram for explaining a configuration of a membrane support 72 according to the first modification.
Fig. 11 is a diagram for explaining the configuration of the membrane support 72 according to the first modification.
Fig. 12 is a diagram for explaining a method for cleaning the organic waste water treatment apparatus 100 according to the first embodiment.
Fig. 13 is a diagram for explaining the method for cleaning the organic waste water treatment apparatus 100 according to the first embodiment.
Fig. 14 is a diagram for explaining the method for cleaning the organic waste water treatment apparatus 100 according to the first embodiment.
Fig. 15 is a diagram for explaining the method for cleaning the organic waste water treatment apparatus 100 according to the first embodiment.
Fig. 16 is a diagram for explaining the method for cleaning the organic waste water treatment apparatus 100 according to the first embodiment.

### DESCRIPTION OF EMBODIMENTS

Hereinafter, embodiments of the present disclosure will be described with reference to the drawings. However, the description should not be interpreted in a limited sense and is not intended to limit the subject matter described in the claims. Also, various changes, replacements, and modifications can be made without departing from the gist and the scope of the present disclosure. Moreover, different embodiments can be appropriately combined.

### [Organic waste water treatment apparatus 800 according to first comparative example]

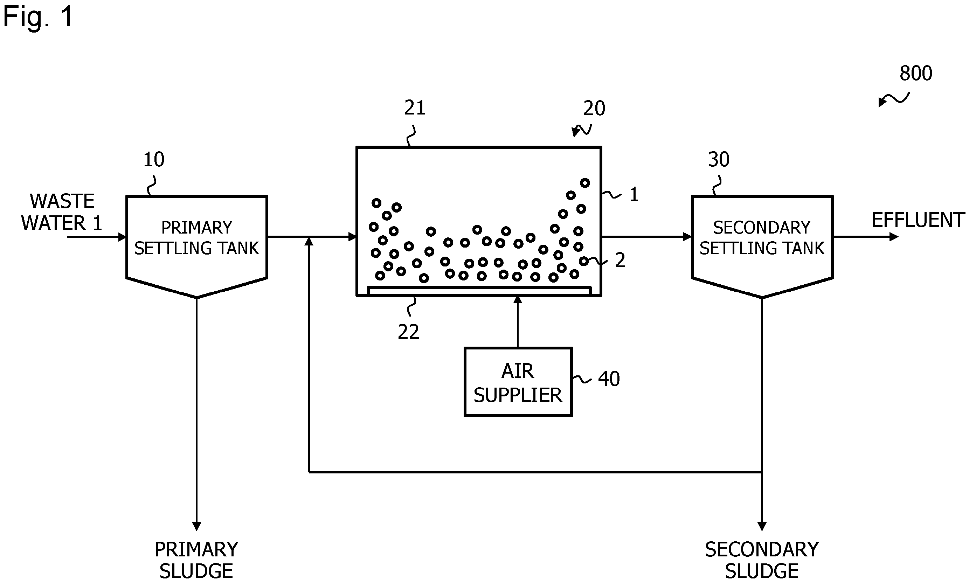

First, a configuration of an organic waste water treatment apparatus 800 (hereinafter, also referred to as an organic waste water processing system 800) according to a first comparative example will be described. Fig. 1 is a diagram for explaining the configuration of the organic waste water treatment apparatus 800 according to the first comparative example. The organic waste water treatment apparatus 800 is adapted to treat contaminants by a so-called activated sludge method. Specifically, the organic waste water treatment apparatus 800 includes, for example, a primary settling tank 10, a reaction tank 20, a secondary settling tank 30, and a supplier 40 as illustrated in Fig. 1.

The primary settling tank 10 precipitates and separates organic substances (solid organic substances, for example) contained in waste water 1 (hereinafter, also simply referred to as liquid), for example. Then, the primary settling tank 10 discharges the separated organic substances as primary sludge to a concentrator (not illustrated) and discharges the waste water 1 after the separation of the organic substances to the reaction tank 20, for example.

The reaction tank 20 includes a tank main body 21 to which the waste water 1 is discharged from the primary settling tank 10 and an air supply pipe 22 through which air 2 (oxygen) is supplied from a bottom portion of the tank main body 21 to the activated sludge (aerobic microorganisms) that is present inside the tank main body 21, and treats the waste water 1 through biological treatment.

Specifically, aeration treatment of supplying the air 2 to the activated sludge that is present inside the tank main body 21, for example, is performed in the reaction tank 20. Then, the organic substances (soluble organic substances, for example) contained in the waste water 1 are decomposed (consumed) by the activated sludge to which the air 2 has been supplied, for example, in the reaction tank 20. Thereafter, the reaction tank 20 discharges the waste water 1 after the decomposition of the organic substances by the activated sludge to the secondary settling tank 30, for example.

The secondary settling tank 30 precipitates and separates the sludge contained in the waste water 1 discharged from the reaction tank 20 and discharges the separated sludge as activated sludge, for example. Then, the secondary settling tank 30 supplies a part of the activated sludge as secondary sludge to the concentrator (not illustrated) and returns the activated sludge other than the secondary sludge as returned sludge to the reaction tank 20, for example. Furthermore, the secondary settling tank 30 discharges the waste water 1 (supernatant liquid) after the separation of the activated sludge to a inactivation device (not illustrated), for example. Thereafter, the inactivation device sterilizes the waste water 1 discharged from the secondary settling tank 30 and releases the inactivated effluent, for example.

The air supplier 40 (hereinafter, also simply referred to as a supplier 40) is an air blower, for example, and supplies the air 2 to the reaction tank 20. Specifically, the supplier 40 supplies the air 2 into the reaction tank 20 via the air supply pipe 22 provided at the bottom portion of the reaction tank 20.

Here, the separation of the activated sludge in the secondary settling tank 30 is performed through natural settlement in the organic waste water treatment apparatus 800. Therefore, in a case where the activated sludge does not sufficiently settle due to bulking or the like, for example, the activated sludge may flow out (carry over) to a device in the subsequent stage in the organic waste water treatment apparatus 800.

Also, the concentration of the activated sludge in the reaction tank 20 changes depending on the amount of sludge returned from the secondary settling tank 30 in the organic waste water treatment apparatus 800. Therefore, the concentration of the activated sludge in the reaction tank 20 depends on a natural settlement property in the secondary settling tank 30 and the size of the secondary settling tank 30 and may become unstable.

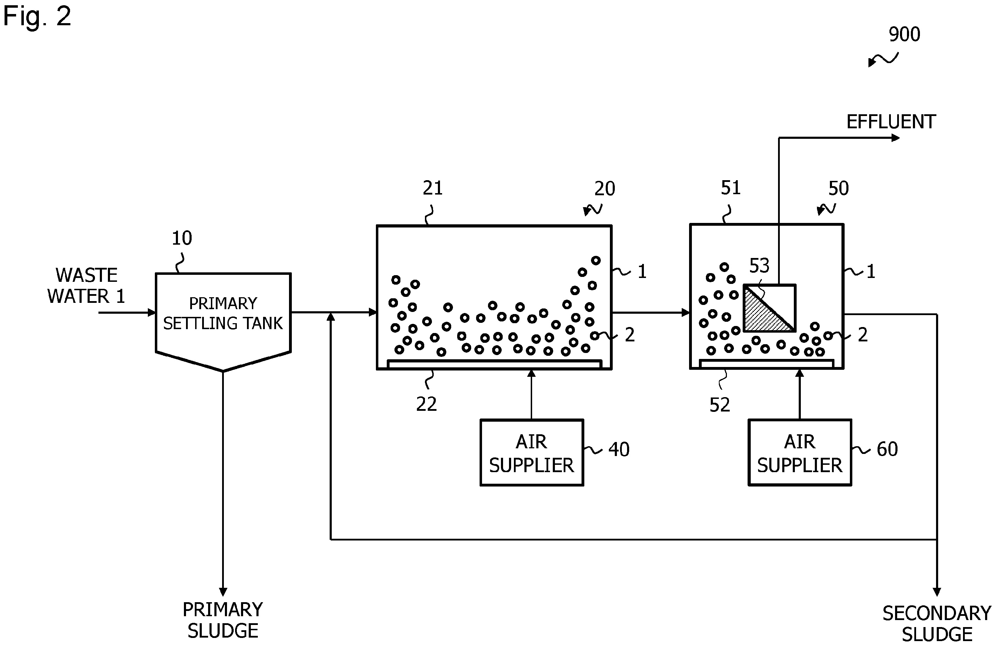

Furthermore, power by which the supplier 40 supplies the air 2 may be increased according to necessity to maintain the concentration of the activated sludge in the reaction tank 20 in the organic waste water treatment apparatus 800. As a method for treating contaminants other than the activated sludge, a membrane separation activated sludge method has been proposed. The membrane separation activated sludge method will be described in Fig. 2.

### [Organic waste water treatment apparatus 900 according to second comparative example]

Next, a configuration of an organic waste water treatment apparatus 900 (hereinafter, also referred to as an organic waste water processing system 900) according to a second comparative example will be described. Fig. 2 is a diagram for explaining the configuration of the organic waste water treatment apparatus 900 according to the second comparative example.

The organic waste water treatment apparatus 900 includes, for example, a primary settling tank 10, a reaction tank 20, a supplier 40, a solid-liquid separation tank 50, and an air supplier 60 (hereinafter, also referred to as a supplier 60) as illustrated in Fig. 2.

The organic waste water treatment apparatus 900 is, for example, an organic waste water treatment apparatus using the membrane separation activated sludge method. Specifically, the organic waste water treatment apparatus 900 includes the solid-liquid separation tank 50 instead of the secondary settling tank 30, for example, as illustrated in Fig. 2. Also, the organic waste water treatment apparatus 900 further includes the supplier 60, for example.

The solid-liquid separation tank 50 includes, for example, a tank main body 51 to which waste water 1 is discharged from the reaction tank 20, an air supply pipe 52 through which air 2 (oxygen) is supplied from a bottom portion of the tank main body 51 to activated sludge (aerobic microorganisms) that is present inside the tank main body 51, and a separation membrane 53 that separates the activated sludge contained in the waste water 1. The separation membrane 53 is, for example, a microfiltration membrane or an ultrafiltration membrane.

Specifically, the solid-liquid separation tank 50 performs separation of activated sludge while suppressing occurrence of blockage due to occurrence of growth (covering) of the activated sludge on the separation membrane 53 and clogging of the separation membrane 53 by aerating the separation membrane 53 from the lower side with the air 2 supplied from the air supply pipe 52 and thereby causing an upward flow of the air 2 and the waste water 1, for example. Also, the solid-liquid separation tank 50 supplies a part of the activated sludge as secondary sludge to a concentrator and returns the activated sludge other than the secondary sludge as returned sludge to the reaction tank 20, for example. Moreover, the solid-liquid separation tank 50 discharges the waste water 1 (supernatant liquid) after the separation of the activated sludge to a inactivation device in the subsequent stage by suctioning the waste water 1 with a pump (not illustrated), for example.

The supplier 60 is, for example, an air blower and supplies the air 2 to the solid-liquid separation tank 50. Specifically, the supplier 60 supplies the air 2 to the air supply pipe 52 provided at the bottom portion of the solid-liquid separation tank 50.

In other words, the organic waste water treatment apparatus 900 performs separation of activated sludge using the separation membrane 53 instead of the separation of the activated sludge through natural settlement. It is thus possible to prevent the activated sludge from leaking to the device in the subsequent stage in the organic waste water treatment apparatus 900.

In addition, the organic waste water treatment apparatus 900 can increase the concentration of the activated sludge to be separated from the waste water 1 in the solid-liquid separation tank 50. Therefore, the organic waste water treatment apparatus 900 can achieve size reduction of the reaction tank 20 as compared with the organic waste water treatment apparatus 800 described in Fig. 1, for example.

Note that the organic waste water treatment apparatus 900 may perform the separation of the activated sludge by the separation membrane 53 while circulating the activated sludge between the reaction tank 20 and the solid-liquid separation tank 50 by using a circulation pump (not illustrated), for example. Also, the organic waste water treatment apparatus 900 may include the separation membrane 53 provided inside the reaction tank 20 instead of including the solid-liquid separation tank 50, for example. Moreover, it is also possible to scour off the secondary sludge adhering to the separation membrane 53 through cleaning to maintain performance of the reaction tank 50 in the membrane separation activated sludge method in Fig. 2.

Here, it is necessary to periodically perform cleaning of the separation membrane 53 using a chemical solution such as hypochlorous acid or an alkali according to necessity to prevent occurrence of blockage of the separation membrane 53, for example, for the organic waste water treatment apparatus 900. Also, it is necessary to periodically replace the separation membrane 53, for example, for the organic waste water treatment apparatus 900.

Moreover, power of the supplier 40, the circulation pump, and the like may be increased due to necessity to separate the activated sludge while preventing occurrence of blockage of the separation membrane 53, for example, for the organic waste water treatment apparatus 900.

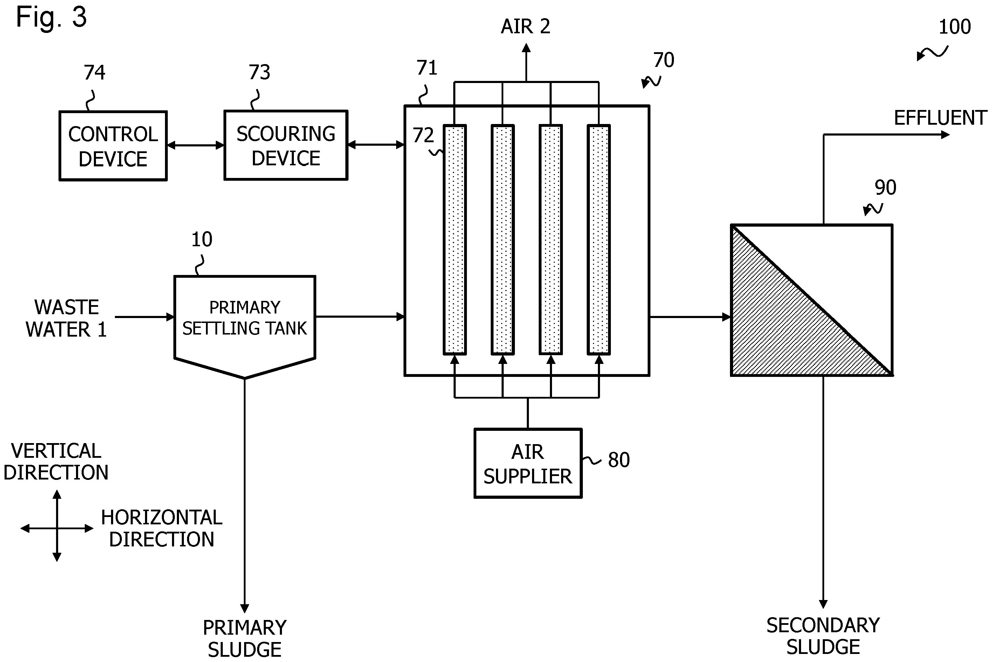

Furthermore, main constituents of the activated sludge separated by the separation membrane 53 are bacterial substances that have grown in the waste water 1. Also, such secondary sludge is in a dispersed state and has a characteristic that the secondary sludge is difficult to dehydrate. Therefore, it is necessary to put a large amount of aggregating agent into the concentrator, for example, in the organic waste water treatment apparatus 900. This leads to an increase in running costs (air supply power, cost for replacing the separation membrane, cost for cleaning, and cost for the aggregating agent, for example) for the organic waste water treatment apparatus explained in Figs. 1 and 2. Thus, an organic waste water treatment apparatus capable of reducing such running costs will be described with reference to Figs. 3 to 8.

### [Organic waste water treatment apparatus 100 according to first embodiment]

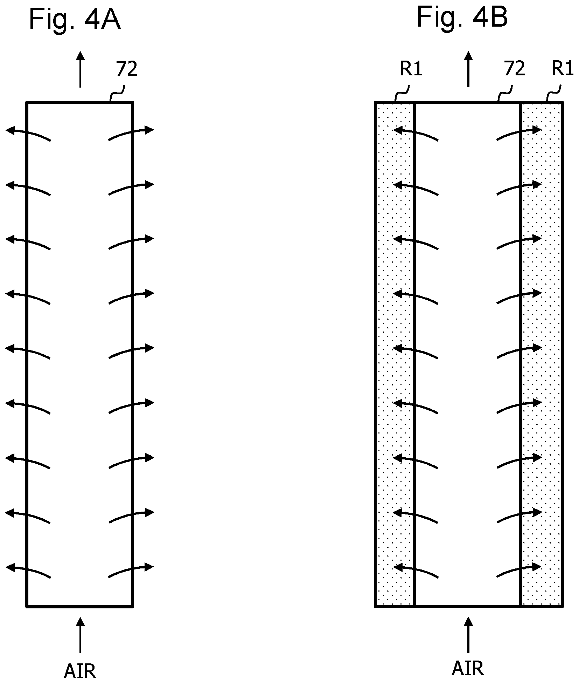

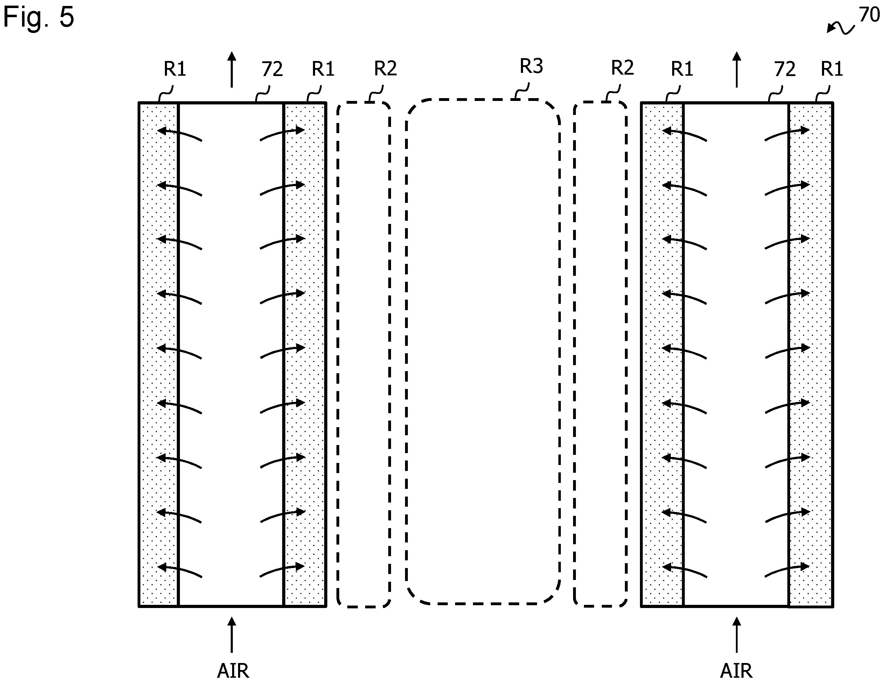

First, a configuration of an organic waste water treatment apparatus 100 (hereinafter, also referred to as an organic waste water treatment system 100) according to a first embodiment will be described. Fig. 3 is a diagram for explaining the configuration of the organic waste water treatment apparatus 100 according to the first embodiment. Also, Figs. 4 and 5 are vertical sectional views for explaining a configuration of a membrane support 72 according to the first embodiment.

The organic waste water treatment apparatus 100 includes, for example, a primary settling tank 10, a reaction tank (in other words, an "activated sludge process") 70, an air supplier 80 (hereinafter, also referred to as a supplier 80), and a solid-liquid separation device 90 as illustrated in Fig. 3.

The organic waste water treatment apparatus 100 performs biological treatment on contaminants contained in organic waste water 1. The organic waste water treatment apparatus 100 includes the reaction tank 70 instead of the reaction tank 20, for example, as illustrated in Fig. 3. Also, the organic waste water treatment apparatus 100 includes the supplier 80 instead of the supplier 40, for example. The supplier 80 is an air blower such as a ventilator or an air fan, for example, and supplies at least oxygen to the reaction tank 70. Note that gas supplied by the supplier 80 may be other gas as long as the gas contains oxygen, and air will be exemplified as the gas containing oxygen below.

The reaction tank 70 (hereinafter, also simply referred to as a tank) performs biological treatment on contaminants contained in organic waste water. The reaction tank 70 is, for example, a membrane aerated biofilm reactor (MABR). Specifically, the reaction tank 70 includes, for example, a tank main body 71 into which the waste water 1 flows from the primary settling tank 10 and one or more membrane supports 72 into which the air 2 supplied by the supplier 80 is supplied. The amount of air supplied by the supplier 80 is smaller than those of the air supplied by the suppliers described in Figs. 1 and 2, and it is possible to save power needed to supply air.

The membrane supports 72 are pipe-shaped membrane supports that allow molecular diffusion of air supplied by the supplier 80 into the reaction tank 70 via a plurality of holes. Specifically, the membrane supports 72 are hydrophobic hollow fiber membranes and for example, membranes made of Teflon (registered trademark). Also, the membrane supports 72 are pipe-shaped membranes with an axial direction extending in the vertical direction (the height direction of the reaction tank 70), for example. A large number of minute holes (holes of about 0.1 microns, for example) are present in surfaces of the membrane supports 72. The molecular dispersion of air from the minute holes into the reaction tank 70 is performed.

Note that although a case where four membrane supports 72 are provided in an aligned manner in the horizontal direction in the reaction tank 70 will be described below, the number of membrane supports 72 provided in the reaction tank 70 may be a number other than four. Also, although a case where the air 2 supplied from the supplier 80 is supplied from the lower side in the vertical direction to the upper side in the vertical direction inside the membrane supports 72 will be described below, the air 2 supplied from the supplier 80 may be supplied from the upper side in the vertical direction to the lower side in the vertical direction inside the membrane supports 72. Moreover, the membrane supports 72 may have a U shape with both end portions facing the upper side in the vertical direction, for example. Furthermore, the membrane supports 72 may have a U shape with both end portions facing the lower side in the vertical direction, for example.

Also, the membrane supports 72 release (molecular dispersion) the air 2 supplied from the supplier 80 from the plurality of holes in the surface to outside (inside the reaction tank 70) as illustrated in Fig. 4(A). As a result, biological membranes containing aerobic bacteria (hereinafter, biofilms R1) are formed on the outer peripheries of the membrane supports 72 through the molecular diffusion of the air into the reaction tank 70 via the plurality of holes. The biological membranes are biological membranes to perform biological treatment with the aerobic bacteria on the contaminants. For example, aggregated biofilms R1 that are biological membranes are formed by activated sludge (aerobic microorganisms) present inside the tank main body 71 adhering to the surfaces (outer peripheries) of the membrane supports 72 as illustrated in Fig. 4(B).

In other words, the biofilms R1 adhering to the surfaces of the membrane supports 72 decompose organic substances contained in the waste water 1 and propagate in the reaction tank 70 according to the present embodiment.

Note that the membrane supports 72 releases the air 2 from the inside to the outside of the membrane supports 72 through the molecular diffusion performed from a gas phase side (the inside of the membrane supports 72) to a liquid phase side (the outside of the membrane supports 72) using the holes in the surfaces as gas-liquid interfaces in order to prevent the biofilms R1 from scouring due to generation of air bubbles from the holes in the surfaces. Therefore, the supplier 80 preferably keeps the pressure inside the membrane supports 72 at a pressure at which air bubbles are not generated from the holes in the surfaces (a pressure that is equal to or lower than a water pressure, for example). In this manner, it is possible to keep the pressure of the air supplied by the supplier 80 at a pressure that is equal to or lower than the water pressure and to thereby keep the pressure to be lower than the pressure of the air supplied by the supplier 40 described in Figs. 1 and 2. Therefore, it is possible to save operation power of the supplier 80 as compared with operation power of the supplier 40. Fig. 3 will be described again.

The reaction tank 70 discharges the waste water 1 (discharged water) after a reaction with the biofilms R1 has been performed to the solid-liquid separation device 90. The solid-liquid separation device 90 separates aggregated sludge containing the biofilms R1 from the discharged water discharged from the reaction tank 70. The sludge to be separated contains various bacteria in addition to aerobic bacteria that are alive or dead.

It is only necessary for the solid-liquid separation device 90 to include a sludge separation function, and the solid-liquid separation device 90 may be a device including the separation membranes described in Fig. 2, for example. Also, the solid-liquid separation device 90 may separate the sludge to be separated from the discharged water through gravitational sedimentation or may separate the sludge to be separated from the discharged water through sand filtration. Alternatively, the solid-liquid separation device 90 may separate the sludge to be separated from the discharged water using supports (so-called support high-speed filtration).

The organic waste water treatment apparatus 100 further includes, for example, a scouring device 73 and a control device 74.

The scouring device 73 is a device that scours off the biofilms R1 adhering to the membrane supports 72 from the membrane supports 72 by causing the membrane supports 72 to vibrate, for example.

The control device 74 is, for example, an electronic device including an electronic circuit. Specifically, the electronic circuit of the control device 74 is, for example, a computer including a central computing unit (CPU), a memory, and the like and controls a timing at which the scouring device 73 scours off the biofilms R1 (hereinafter, also referred to as a scouring timing) by a program stored in a storage device (not illustrated) and the CPU cooperating with each other. Note that the electronic circuit that performs such control may be, for example, a field programmable gate array (FPGA) or an application specific integrated circuit (ASIC).

Note that although the following description will be given on the assumption that the scouring of the biofilms R1 is performed using the scouring device 73 in the reaction tank 70, the scouring of the biofilms R1 may be performed by jetting gas such as air, for example, in the reaction tank 70 (so-called membrane cleaning). Also, the control device 74 may control a timing at which jetting is performed, for example, in this case.

In other words, the reaction tank 70 according to the present embodiment decomposes the organic substances contained in the waste water 1 discharged from the primary settling tank 10 to the reaction tank 70 with the biofilms R1 adhering to the membrane supports 72, intermittently scours off the biofilms R1 that have taken the organic substances and have been aggregated from the membrane supports 72 and discharges the sludge containing the biofilms R1 to the solid-liquid separation device 90.

In this manner, the reaction tank 70 according to the present embodiment can suppress the amount of sludge discharged to the solid-liquid separation device 90 in a time zone in which decomposition of the organic substances with the biofilms R1 is being performed (a time zone during which scouring of the biofilms R1 is not being performed), for example. Therefore, the reaction tank 70 can discharge the waste water 1 to the solid-liquid separation device 90 in a state where a propagation potential is low in this case. Therefore, it is possible to prevent propagation of the activated sludge in the solid-liquid separation device 90. Also, in a case where the solid-liquid separation device 90 performs solid-liquid separation with the separation membranes, it is possible to prevent occurrence of clogging of the separation membranes.

Also, the reaction tank 70 according to the present embodiment can prevent occurrence of clogging of the separation membranes in a case where the solid-liquid separation device 90 performs solid-liquid separation with the separation membranes by discharging the sludge containing the biofilms R1 to the solid-liquid separation device 90 even in a time zone in which scouring of the biofilms R1 is being performed, for example.

Moreover, since the solid-liquid separation device 90 according to the present embodiment performs solid-liquid separation on the aggregated sludge from the waste water, it is possible to easily dehydrate the separated sludge. Therefore, the organic waste water treatment apparatus 100 according to the present embodiment can suppress the amount of aggregating agent that is needed to be put to a dehydrator or the like that dehydrates the sludge and can suppress cost required to dehydrate the sludge.

Also, the reaction tank 70 according to the present embodiment can have a larger surface area than that in a case where membrane supports having a shape other than the pipe shape are used, by using the pipe-shaped membrane supports 72. Therefore, it is possible to reduce a reaction volume of the activated sludge (aerobic microorganisms) and the organic substances and to reduce the size of the reaction tank 70 in the organic waste water treatment apparatus 100 according to the present embodiment. Specifically, it is possible to lower the height (water depth) of the reaction tank 70 in the vertical direction, for example, in the organic waste water treatment apparatus 100.

Also, since the supplier 80 according to the present embodiment can keep the pressure inside the membrane supports 72 at a pressure at which air bubbles are not generated from the holes in the surface, it is possible to suppress power that accompanies the supply of the air 2 as compared with the case where the supplier 40 described in Fig. 2 is used, for example.

In addition, the reaction tank 70 according to the present embodiment can form aerobic layers R1 (biofilms R1), oxygen-free layers R2, and an anaerobic layer R3 from the surfaces of the membrane supports 72 toward the liquid phase side as illustrated in Fig. 5 through molecular diffusion of oxygen from the holes in the surfaces of the membrane supports 72. In other words, the aerobic layer R1, the oxygen-free layer R2, the anaerobic layer R3, the oxygen-free layer R2, and the aerobic layer R1 are formed in order as illustrated in Fig. 5 between two membrane supports 72 in this case. Therefore, it is possible to nitrify ammonia contained in the waste water 1 by a nitrification effect, for example, in the aerobic layers R1 in the reaction tank 70. Also, it is possible to remove (denitrify) nitrogen contained in the waste water 1 by a denitrification reaction in the oxygen-free layers R2 and the anaerobic layer R3.

Note that since treatment of the organic substances is performed with the biofilms R1 adhering to the membrane supports 72 in the reaction tank 70 according to the present embodiment, it is not necessary to maintain the concentration of activated sludge in the liquid phase at a specific level unlike the case where the reaction tank 20 described in Fig. 2, for example, is used. Therefore, it is not necessary to substantially return the sludge from the solid-liquid separation device 90 to the reaction tank 70 unlike the organic waste water treatment apparatus 900 described in Fig. 2, for example, in the organic waste water treatment apparatus 100 according to the present embodiment. In this manner, it is possible to substantially omit a facility necessary to return the sludge, for example, in the organic waste water treatment apparatus 100. If the sludge is returned to the reaction tank 70, the returned sludge is propagated as activated sludge in the reaction tank 70. If the propagated activated sludge is discharged to the solid-liquid separation device 90, the activated sludge is not aggregated, and a dehydration property of the sludge is at the same level as that of sludge in the organic waste water treatment apparatus described in Fig. 2. However, since it is not necessary to substantially return sludge in the present embodiment, it is possible to improve a dehydration property of secondary sludge separated in the solid-liquid separation device 90 by discharging only sludge (aggregated) of scoured biofilms R1 to the solid-liquid separation device 90.

The above description that it is not necessary to substantially return the sludge from the solid-liquid separation device 90 to the reaction tank 70 (in other words, the sludge is not substantially returned) indicates that returning of the sludge is allowed without departing from the gist of the present disclosure. Specifically, the sludge may be returned from the solid-liquid separation device 90 to the reaction tank 70 as long as a state where the dehydration property of the sludge separated by the solid-liquid separation device 90 is higher than the dehydration property of sludge in the organic waste water treatment apparatus described in Fig. 2 can be maintained. In a case where such returning is performed, the amount of returned sludge (returning time period) in the present embodiment is smaller (shorter) than the amount of returned sludge (returning time period) in the organic waste water treatment apparatus described in Fig. 2.

Also, the organic waste water treatment apparatus 900 (membrane separation activated sludge method) described in Fig. 2 requires a specific activated sludge floating substance (mixed liquor suspended solids (MLSS)) for various biological reactions to proceed in floating sludge in the liquid phase in the reaction tank 20. However, since various kinds of biological treatment proceeds in the biofilms R1 adhering to the surfaces of the membrane supports 72 in the reaction tank 70 according to the present embodiment, it is possible to lower the concentration of MLSS as compared with the membrane separation activated sludge method and to thereby minimize the amount of sludge that flows the solid-liquid separation device 90 and blocks solid-liquid separation.

In addition, gas with a higher concentration of oxygen than air instead of air may be supplied from the supplier 80 according to the present embodiment to the membrane supports 72. In this manner, it is possible to reduce the number of membrane supports 72 that are required to be provided inside the reaction tank 70 in the reaction tank 70 as compared with the case where the air 2 is supplied from the supplier 80 to the membrane supports 72.

Also, oxygen obtained through water electrolysis using renewable energy, for example, may be used as oxygen supplied to the membrane supports 72 in the reaction tank 70 according to the present embodiment. For example, oxygen obtained through electrolysis of water using electrical energy generated using waste heat in sludge incineration may be used. In the power generation, it is possible to use various power generation technologies such as an organic Rankine cycle (ORC), for example. It is possible to realize energy saving and to reduce the amount of discharged carbon dioxide by using oxygen obtained through water electrolysis using renewable energy as an oxygen source.

### [Effects of first embodiment]

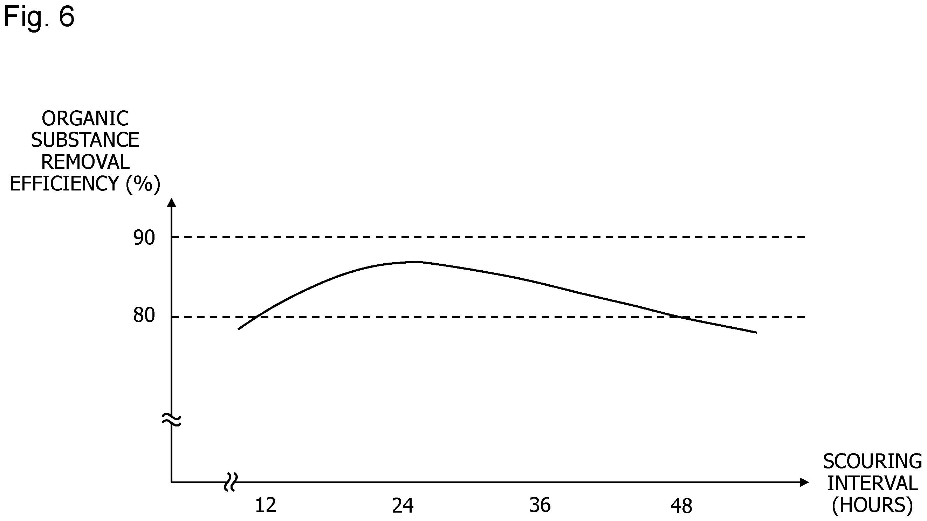

Next, effects of the first embodiment will be described. Figs. 6 to 8 are diagrams for explaining effects of the first embodiment.

First, a relationship between a scouring interval of the biofilms R1 from the membrane supports 72 and an organic substance removal efficiency in the reaction tank 70 will be described. Fig. 6 is a graph illustrating the relationship between the scouring interval of the biofilms R1 and the organic substance removal efficiency. Note that the horizontal axis in the graph illustrated in Fig. 6 indicates the scouring interval of the biofilms R1 (hereinafter, also simply referred to as a scouring interval) while the vertical axis in the graph illustrated in Fig. 6 indicates the organic substance removal efficiency (hereinafter, also simply referred to as a removal rate).

The graph illustrated in Fig. 6 indicates that the removal rate rises until the scouring interval becomes about 24 (h) and further, the removal rate is lowered as the scouring interval increases from about 24 (h). Also, the graph illustrated in Fig. 6 indicates that the removal rate is about 88 (%) in a case where the scouring interval is about 24 (h) and the removal rate is about 80 (%) in a case where the scouring interval is about 12 (h) or about 48 (h).

In other words, the graph illustrated in Fig. 6 indicates that it is possible to keep the removal rate at 80 (%) or more and it is possible to suppress organic substances discharged to the solid-liquid separation device 90 to be equal to or less than 20 (%) in a case where the scouring interval is equal to or greater than 12 (h) and equal to or less than 48 (h), for example.

On the other hand, the graph illustrated in Fig. 6 indicates that the removal rate decreases in a case where the scouring interval is equal to or greater than 48 (h), for example. This is because the waste water 1 is not sufficiently supplied to the biofilms R1 on the side of the membrane supports 72 (parts where oxygen supply from the membrane supports 72 can be directly received) and organic substances are not sufficiently removed in a case where the thickness of the biofilms R1 that are aggregated sludge is equal to or greater than a predetermined thickness.

Therefore, the control device 74 may control the scouring timing of the biofilms R1 such that the scouring interval is equal to or greater than 12 (h) and equal to or less than 48 (h), that is, the removal rate of 80 (%) or more is maintained, for example. Specifically, the control device 74 may be adapted to control the scouring timing of the biofilms R1 such that the scouring interval is 24 (h) or 48 (h), for example. Hereinafter, a case where the solid-liquid separation device 90 performs solid-liquid separation with separation membranes will be described as an example.

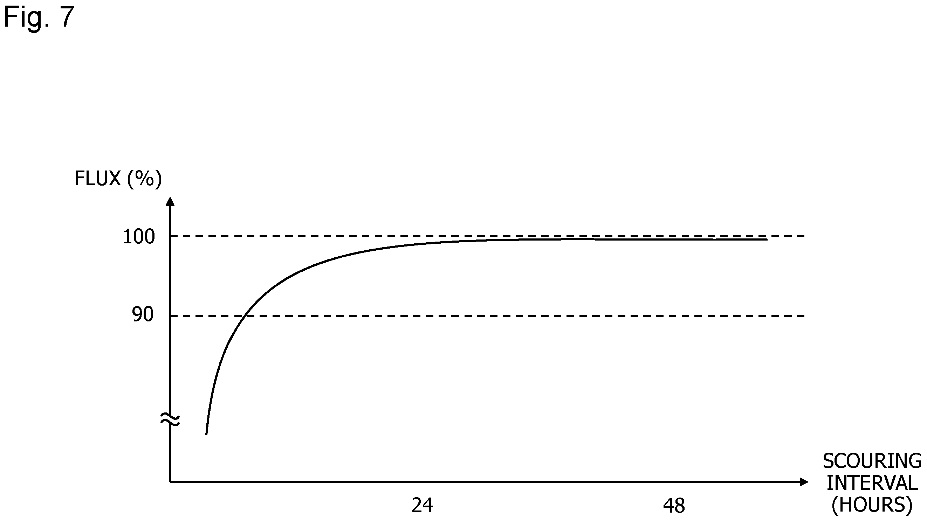

Next, a relationship between the scouring interval of the biofilms R1 and a flow flux (hereinafter, also referred to as a flux) in the solid-liquid separation device 90 will be described. Fig. 7 is a graph illustrating a relationship between the scouring interval of the biofilms R1 and the flux in the solid-liquid separation device 90. Note that the horizontal axis in the graph illustrated in Fig. 7 indicates the scouring interval of the biofilms R1 while the vertical axis in the graph illustrated in Fig. 7 indicates the flux in the solid-liquid separation device 90 in a case where the flux in the solid-liquid separation device 90 when no blocking has occurred is defined as 100 (%).

The graph illustrated in Fig. 7 indicates that the flux rises until the scouring interval becomes about 24 (h). Also, the graph illustrated in Fig. 7 indicates that the flux becomes approximately 100 (%) in a case where the scouring interval is equal to or greater than 24 (h).

In other words, the graph illustrated in Fig. 7 indicates that it is possible to form the biofilms R1 with a sufficient size on the membrane supports 72, to suppress occurrence of clogging of the solid-liquid separation device 90, and to thereby keep the flux at a high level in the case where the scouring interval is equal to or greater than 24 (h), for example.

On the other hand, the graph illustrated in Fig. 7 indicates that the biofilms R1, the size of which has not become sufficiently large, are discharged to the solid-liquid separation device 90, clogging occurs in the solid-liquid separation device 90, and the flux may be degraded in a case where the scouring time is equal to or less than 24 (h), for example.

Therefore, the control device 74 may be adapted to control the scouring timing of the biofilms R1 such that the scouring interval is equal to or greater than 24 (h), that is, the flux of about 100 (%) is maintained, for example.

Also, the control device 74 may control the scouring timing of the biofilms R1 such that the amount of substrates such as organic substances discharged from the reaction tank 70 to the solid-liquid separation device 90 satisfies a predetermined condition, for example. Specifically, the control device 74 may control the scouring timing of the biofilms R1 such that the amount of substrates discharged from the reaction tank 70 to the solid-liquid separation device 90 (that is, the amount of substrates in the discharged water) is equal to or less than a predetermined proportion of the amount of substrates in the waste water that flows from the primary settling tank 10 to the reaction tank 70, that is, about 1/5, for example.

Furthermore, the control device 74 may control the scouring timing of the biofilms R1 such that it not necessary to return the returned sludge from the solid-liquid separation device 90 to the reaction tank 70, for example, that is, the control device 74 maintains a necessary amount of activated sludge inside the reaction tank 70 through propagation of the activated sludge, for example.

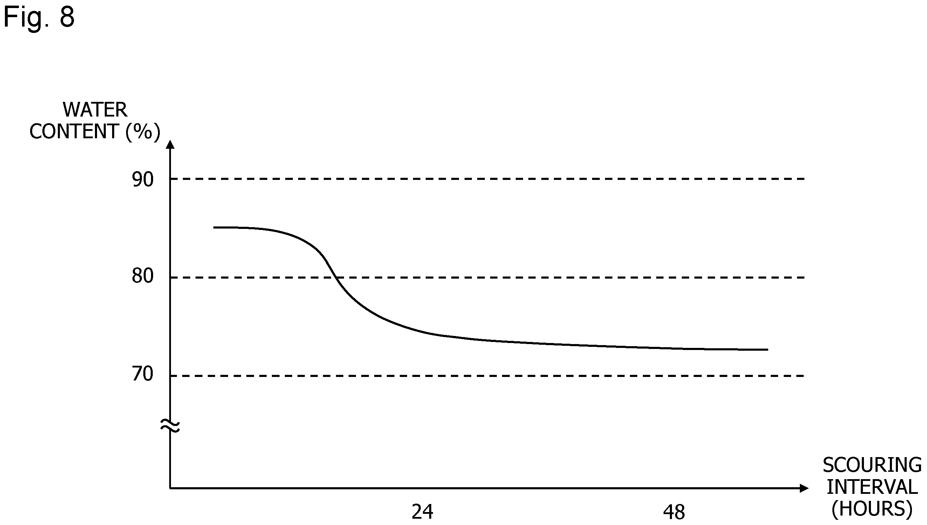

Next, a relationship between the scouring interval of the biofilms R1 and the water content of sludge after the sludge containing the scoured biofilms R1 is dehydrated by the dehydrator (hereinafter, also referred to as dehydrated cake) will be described. Fig. 8 is a graph illustrating a relationship between the scouring interval of the biofilms R1 and the water content of the dehydrated cake. Note that the horizontal axis in the graph illustrated in Fig. 8 indicates the scouring interval of the biofilms R1 while the vertical axis in the graph illustrated in Fig. 8 indicates the water content of the dehydrated cake (hereinafter, also simply referred to as a water content).

The graph illustrated in Fig. 8 indicates that the water content decreases as the scouring interval increases. Also, the graph illustrated in Fig. 8 illustrates that in a case where the scouring interval is greater than 24 (h), the water content significantly decreases as compared with a case where the scouring interval is less than 24 (h).

In other words, the graph illustrated in Fig. 8 indicates that it is possible to effectively decrease the water content of the dehydrated cake in a case where the scouring interval is equal to or greater than 24 (h), for example. Sludge containing the scoured biofilms R1 obtained in the case where the scouring interval is equal to or greater than 24 (h) is dense. If such dense sludge is dehydrated, then sludge with a low water content is obtained.

Therefore, the control device 74 may control the scouring timing of the biofilms R1 such that the scouring interval is equal to or greater than 24 (h), that is, the water content of the dehydrated cake is equal to or less than 75 (%), for example.

Note that the control device 74 may control the scouring timing of the biofilms R1 such that the scouring interval is equal to or greater than 24 (h) and equal to or less than 48 (h), for example, in accordance with all the graphs illustrated in Figs. 6 to 8.

As described above, the biofilms R1 adhering to the membrane supports 72 are aggregated on the membrane supports 72 by the biofilms R1 taking organic substances in the organic waste water treatment apparatus 100 according to the present embodiment. Therefore, the organic waste water treatment apparatus 100 can discharge discharged water containing sludge (aggregated sludge) containing the aggregated biofilms R1 to the solid-liquid separation device 90. Also, the organic waste water treatment apparatus 100 can suppress the amount of organic substances and activated sludge discharged from the reaction tank 70 to the solid-liquid separation device 90 by forming the aggregated biofilms R1 on the membrane supports 72. Therefore, the organic waste water treatment apparatus 100 can prevent occurrence of propagation of activated sludge in the solid-liquid separation device 90 and clogging of the solid-liquid separation device 90 and can prevent occurrence of blocking of the solid-liquid separation device 90.

Also, the aggregated biofilms R1 have characteristics that the particle diameters are large and sedimentation is likely to occur in the organic waste water treatment apparatus 100 according to the present embodiment. Therefore, it is easy to dehydrate the sludge separated from the discharged water in the solid-liquid separation device 90 and to suppress the amount of aggregating agent that is necessary to be put into the dehydrator or the like in the organic waste water treatment apparatus 100. Therefore, the organic waste water treatment apparatus 100 can suppress cost required to dehydrate the sludge, for example.

In the present embodiment, the sludge (scoured sludge) contained in the discharged water discharged to the solid-liquid separation device 90 is aggregated sludge. The aggregated sludge is constituted mainly by the aggregated biofilms R1, and the aggregated sludge (hereinafter, referred to as sludge in the present embodiment) is dense as described above and is easily dehydrated. Then, the aggregated sludge is separated by the solid-liquid separation device 90.

On the contrary, the sludge scoured off from the separation membranes 53 in the reaction tank 50 in Fig. 2 (hereinafter, referred to as sludge in Fig. 2) in order to maintain performance of the reaction tank 50 in Fig. 2 is constituted mainly by bacterial substances that have been propagated in the waste water 1. Also, such sludge is in a dispersed state and is difficult to dehydrate.

In this manner, the main constituent of the sludge in the present embodiment is different from the main constituent of the sludge in Fig. 2 (in other words, sludge to be dehydrated (scoured)), and as a result of the difference, it is possible to reduce the amount of aggregating agent to be added in the present embodiment as compared with the amount of aggregating agent to be added when the sludge in Fig. 2 is dehydrated, in a case where a desired water content is achieved as the water content of sludge after the dehydration.

It is possible to reduce the amount of aggregating agent to be added and to suppress running costs by choosing the sludge that is easily dehydrated as a target of solid-liquid separation as in the present embodiment.

In addition, since the scouring interval is equal to or greater than several weeks in the scouring of biological membranes performed by a device that performs a sprinkling filter process, for example, activated sludge with low strength (soft activated sludge) is scoured off. Therefore, the water content of the dehydrated cake generated from the scoured activated sludge is similar to a water content of a dehydrated cake generated from ordinary activated sludge.

On the contrary, it is possible to obtain biological membranes (biofilms R1 scoured off from the membrane supports 72) that enable a dehydrated cake with low water content to be generated by setting the scouring interval to 24 (h) to 48 (h), for example, in the present disclosure.

Note that the organic waste water treatment apparatus 100 according to the first embodiment may use a solid-liquid separation device (not illustrated) that performs high-speed filtration instead of the primary settling tank 10, for example. In this manner, the organic waste water treatment apparatus 100 can further reduce the amount of organic substances (solid organic substances, for example) to be supplied to the reaction tank 70 and can more efficiently decompose the organic substances with the membrane supports 72.

### [Organic waste water treatment apparatus 100 according to first modification example]

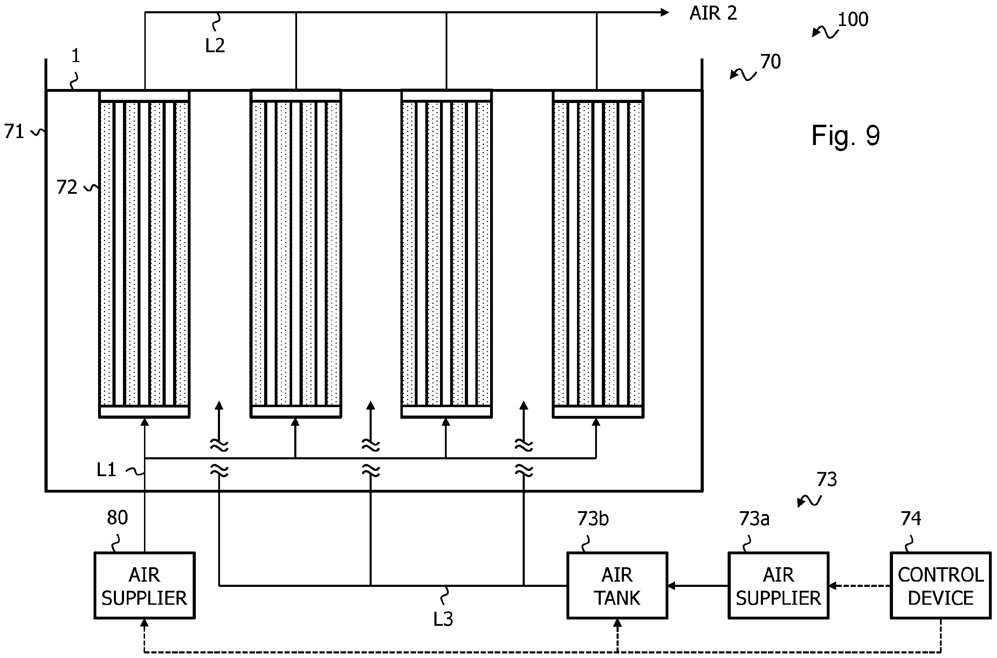

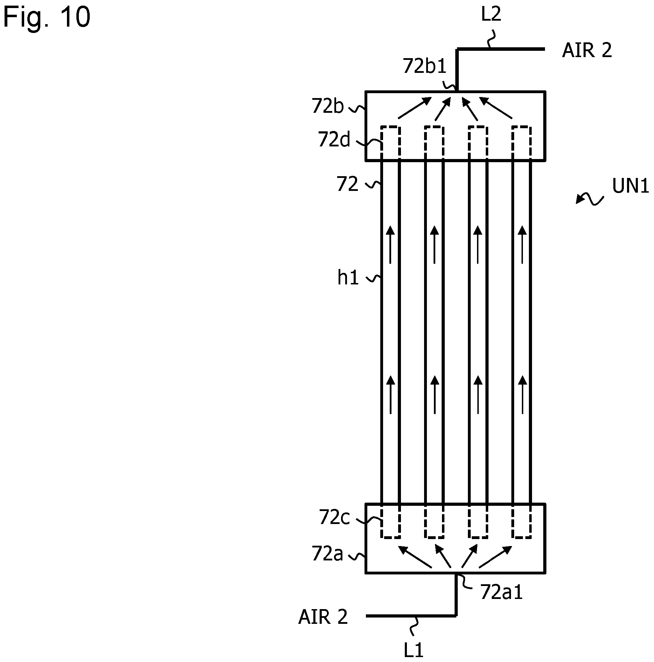

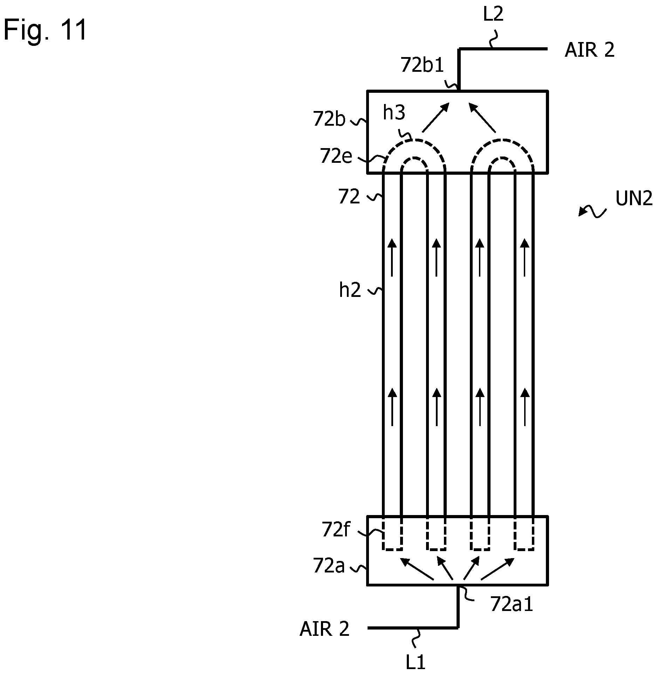

Next, a configuration of the organic waste water treatment apparatus 100 according to a first modification example will be described. Fig. 9 is a diagram for explaining a configuration of the reaction tank 70 according to the first modification example. Also, Figs. 10 and 11 are diagrams for explaining a configuration of the membrane support 72 according to the first modification example.

### [Scouring device 73 and control device 74 according to first modification example]

First, the scouring device 73 and the control device 74 according to the first modification example will be described. The scouring device 73 according to the first modification example performs scouring of the biofilms R1 by supplying gas such as air (hereinafter, also simply referred to as air), for example. Also, the control device 74 according to the first modification example controls a timing at which the scouring device 73 supplies air, for example.

The scouring device 73 includes an air supplier 73a (hereinafter, also referred to as a supplier 73a) such as a compressor that compresses air taken from the outside and generates compressed air (not illustrated) and an air tank 73b that stores the compressed air supplied from the supplier 73a, for example, as illustrated in Fig. 9.

Then, the control device 74 controls supply (jetting) of the compressed air stored in the air tank 73b to the reaction tank 70, for example.

Specifically, the control device 74 scours off the biofilms R1 from the membrane supports 72 by supplying the compressed air stored in the air tank 73b to a plurality of locations inside the reaction tank 70 via a line L3 when the scouring timing of the biofilms R1 arrives, for example. The line L3 is a pipe that couples the air tank 73b to the plurality of locations inside the reaction tank 70, for example. Also, the control device 74 performs control such that the scouring interval of the biofilms R1 is equal to or greater than 24 (h), for example, as described in Fig. 6 and the like.

Note that the control device 74 may be adapted to control a compressed air generation timing (a timing at which compressed air is supplied to the air tank 73b) of the supplier 73a such that the pressure inside the air tank 73b is maintained in a specific range, for example, as illustrated in Fig. 9.

Also, the control device 74 may be adapted to control the amount of air 2 to be supplied by the supplier 80 such that the amount of air 2 to be supplied to the membrane supports 72 is constant, in addition to the control of the scouring device 73, for example.

Specifically, the control device 74 may be adapted to acquire a measurement value from measuring instrument (not illustrated) that measures at least one of an inlet pressure of the membrane supports 72, an outlet pressure, and the amount of air discharged from the membrane supports 72 (that is, the amount of excess air), for example. Also, the control device 74 may be adapted to control the amount of air 2 supplied from the supplier 80 to the membrane supports 72 in accordance with the acquired measurement value, for example. Hereinafter, description will be given on the assumption that the control device 74 controls the amount of air 2 supplied by the supplier 80.

Also, although the example illustrated in Fig. 9 illustrates a case where compressed air is supplied between the membrane supports 72, the compressed air may be supplied to lower ends or lower sides of the membrane supports 72, for example.

### [Specific example of membrane supports 72 according to first modification example]

Next, a configuration of the membrane supports 72 according to the first modification example will be described.

A unit UN1 is formed by bundling the plurality of membrane supports 72, for example, as illustrated in Figs. 9 and 10 in the reaction tank 70 according to the first modification example. In this manner, it is possible to reduce the number of pipes constituting a line L1 that supplies the air 2 to each membrane support 72 and the number of pipes constituting a line L2 that discharges the air 2 from each membrane support 72, for example, in the reaction tank 70 according to the first modification example.

Specifically, the example illustrated in Fig. 9 illustrates a case where four units UN1 each formed by bundling four membrane supports 72 are disposed inside the reaction tank 70. Note that although the case where four membrane supports 72 constitute a single unit UN1 will be described below, membrane supports 72, the number of which is other than four, may constitute a single unit UN1.

The plurality of membrane supports 72 forming a single unit UN1 (hereinafter, also simply referred to as a plurality of membrane supports 72) include a first mold portion 72a that is formed by molding lower end portions 72c of the plurality of membrane supports 72 with a resin (for example, plastic) or the like and a second mold portion 72b that is formed by molding upper end portions 72d of the plurality of membrane supports 72 with a resin or the like, for example, as illustrated in Fig. 10. In other words, the plurality of membrane supports 72 form a single unit UN1 by the lower end portions 72c and the upper end portions 72d of the membrane supports 72 being molded, for example.

The first mold portion 72a includes a first air hole 72a1 that introduces the air 2 supplied from the supplier 80 into the first mold portion 72a via the line L1, for example. The line L1 is a pipe that couples the supplier 80 to the first air hole 72a1 in each of the plurality of units UN1, for example, as illustrated in Figs. 9 and 10. Then, the air 2 introduced from the air hole 72a1 to the inside of the first mold portion 72a is supplied from the lower end portion 72c of each of the plurality of membrane supports 72 to the inside of each of the plurality of membrane supports 72, for example.

Also, the second mold portion 72b includes a second air hole 72b1 that discharges the air 2 inside the second mold portion 72b to outside via the line L2, for example. The line L2 is a pipe that couples the second air hole 72b1 of each of the plurality of units UN1 to the outside, for example, as illustrated in Figs. 9 and 10. In other words, the second air hole 72b1 discharges the air 2 discharged from the upper end portion 72d of each of the plurality of membrane supports 72 into the second mold portion 72b to the outside, for example.

Specifically, the air 2 supplied (pushed) into the first mold portion 72a via the line L1 and the first air hole 72a1 is supplied to the inside of each of the plurality of membrane supports 72 as illustrated by the solid arrows in Fig 10. Then, at least a part of the air 2 supplied to each membrane support 72 is subjected to molecular diffusion into the reaction tank 70 via a plurality of holes h1 (holes of about 0.1 microns, for example) provided in each membrane support 72, for example, as described in Fig. 4 and the like in a process of moving from the lower end portion 72c to the upper end portion 72d inside each membrane support 72. Subsequently, the air 2 that has moved from the lower end portion 72c to the upper end portion 72d inside each membrane support 72 (the air 2 that has not been subjected to molecular diffusion into the reaction tank 70) is supplied from the upper end portion 72d into the second mold portion 72b, for example. Thereafter, the air 2 supplied into the second mold portion 72b is discharged to the outside via the second air hole 72b1 and the line L2, for example.

In this manner, the supplier 80 supplies the air 2 (air 2 containing at least oxygen) from the lower end portions 72c of the membrane supports 72 (hereinafter, also simply referred to as lower ends) to the inside of the membrane supports 72, for example, in the organic waste water treatment apparatus 100 in the first modification example. Then, the membrane supports 72 allows molecular diffusion of at least a part of the air 2 supplied from the lower end portions 72c into the reaction tank 70 via the plurality of holes h1, and discharges the air 2 that has not been subjected to molecular diffusion into the reaction tank 70 in the air 2 supplied from the lower end portions 72c from the upper end portions 72d of the membrane supports 72 (hereinafter, also simply referred to as upper ends) to the outside, for example.

Note that although the membrane supports 72 illustrated in Fig. 10 have a straight line shape (I shape), the shape is not limited thereto. Specifically, it is only necessary for the membrane supports 72 to have a shape with which the air 2 supplied from the lower end portions 72c is discharged from the upper end portions 72d, for example, and the membrane supports 72 may have a shape with at least a part thereof curved (doglegged shape), for example.

Also, although the membrane supports 72 illustrated in Fig. 10 supply (push) the air 2 from the lower end portions 72c into the membrane supports 72 and discharge the air 2 inside the membrane supports 72 from the upper end portions 72d, the membrane supports 72 are not limited thereto. Specifically, the membrane supports 72 may be adapted to supply the air 2 from the upper end portions 72d into the membrane supports 72 and discharge the air 2 inside the membrane supports 72 from the lower end portions 72c, for example.

Also, the amount of air 2 to be supplied to each of the plurality of membrane supports 72 may be determined such that the amount of air 2 that is subjected to molecular diffusion from the plurality of holes h1 on the side of the lower end portions 72c into the reaction tank 70 and the amount of air 2 that is subjected to molecular diffusion from the plurality of holes h1 on the side of the upper end portions 72d into the reaction tank 70 are the same, for example. In other words, the amount of air 2 supplied to each of the plurality of membrane supports 72 may be determined such that an oxygen partial pressure at each position inside each membrane support 72 is maximized (the same pressure as the atmospheric pressure), for example.

Also, a filter (not illustrated) to remove fine particles (dust, for example) contained in the air 2 supplied from the supplier 80, for example, may be installed in the line L1.

### [Other specific examples of membrane supports 72 according to first modification example]

Next, other configurations of the membrane supports 72 according to the first modification example will be described. Hereinafter, points that are different from those of the membrane supports 72 described in Fig. 10 will be described.

The reaction tank 70 according to the first modification example may be adapted such that each membrane support 72 is arranged to form a U shape (hereinafter, also referred to as an inverted U shape) with both ends (hereinafter, also referred to as both end portions 72f) facing downward (the lower side in the vertical direction, for example), for example, as illustrated in Fig. 11. In other words, the reaction tank 70 may be adapted such that each membrane support 72 is arranged in a state where at least one location (hereinafter, also referred to as a curved portion 72e) is curved, for example, as illustrated in Fig. 11. Also, the reaction tank 70 may be adapted such that a unit UN2 is formed by bundling the plurality of membrane supports 72 arranged to form the inverted U shape, for example. Note that although a case where two membrane supports 72 arranged to form the inverted U shape constitute a single unit UN2 will be described below, the membrane supports 72, the number of which is a number other than two, may constitute a single unit UN2.

Specifically, the air 2 supplied (pushed) from the air hole 72a1 to the inside of the first mold portion 72a is supplied from both end portions 72f of each of the plurality of membrane supports 72 to the inside of each of the plurality of membrane supports 72, for example, in this case. In other words, each of the both end portions 72f illustrated in Fig. 11 has a function similar to that of the lower end portions 72c described in Fig. 10, for example.

More specifically, the air 2 supplied from the supplier 80 into the first mold portion 72a via the line L1 and the first air hole 72a1 is supplied to each of the plurality of membrane supports 72, for example, as illustrated by the solid line arrows in Fig. 11. Then, the air 2 supplied to each membrane support 72 is subjected to molecular diffusion into the reaction tank 70 via a plurality of holes h2 (holes of about 0.1 microns, for example) provided at a part of each membrane support 72 located outside the first mold portion 72a and the second mold portion 72b, for example, as described in Fig. 4 and the like in a process of moving from the both end portions 72f to the curved portion 72e inside each membrane support 72. Subsequently, the air 2 that has moved from the both end portions 72f to the curved portion 72e inside each membrane support 72 (the air 2 that has not been subjected to molecular diffusion into the reaction tank 70) is supplied from a plurality of holes h3 provided in the curved portion 72e of each membrane support 72 into the second mold portion 72b, for example. Thereafter, the air 2 supplied into the second mold portion 72b is discharged to the outside via the second air hole 72b1 and the line L2, for example. In other words, the plurality of holes h3 provided in the curved portion 72e illustrated in Fig. 11 have a function similar to that of the upper end portions 72d described in Fig. 10, for example.

In this manner, each membrane support 72 includes the curved portion 72e obtained by curving the membrane support 72 such that each of the both end portions 72f of the membrane support 72 faces downward, for example, in the organic waste water treatment apparatus 100 according to the first modification example. Also, the supplier 80 supplies the air 2 (the air 2 containing at least oxygen) from each of both the end portions 72f of the membrane support 72 (in other words, each of the lower ends of the membrane support 72) to the inside of the membrane support 72, for example. Furthermore, the membrane support 72 subjects at least a part of the air 2 supplied from at least any one of the both ends of the membrane support 72 to molecular diffusion into the reaction tank 70 via the plurality of holes h2 (hereinafter, also referred to as a plurality of first holes), and discharges the air 2 that has not been subjected to the molecular diffusion into the reaction tank 70 in the air 2 supplied from at least any one of both ends of the membrane support 72 to the outside via the plurality of holes h3 (hereinafter, also referred to as a plurality of second holes) provided in the curved portion 72e (in other words, the upper end of the membrane support 72) located on the side further upward than the plurality of holes h2, for example.

Note that the air 2 inside the membrane support 72 illustrated in Fig. 11 is discharged into the second mold portion 72b via the plurality of holes h3 provided in the curved portion 72e unlike the case of the membrane support 72 illustrated in Fig. 10. Therefore, a pressure loss that accompanies the discharge of the air 2 increases in the membrane support 72 illustrated in Fig. 11 as compared with the case of the membrane support 72 illustrated in Fig. 10. Thus, the membrane support 72 illustrated in Fig. 11 can increase the amount of air 2 to be supplied into the reaction tank 70 through the molecular diffusion as compared with the membrane support 72 illustrated in Fig. 10.

### [Method for cleaning organic waste water treatment apparatus 100 according to first embodiment]

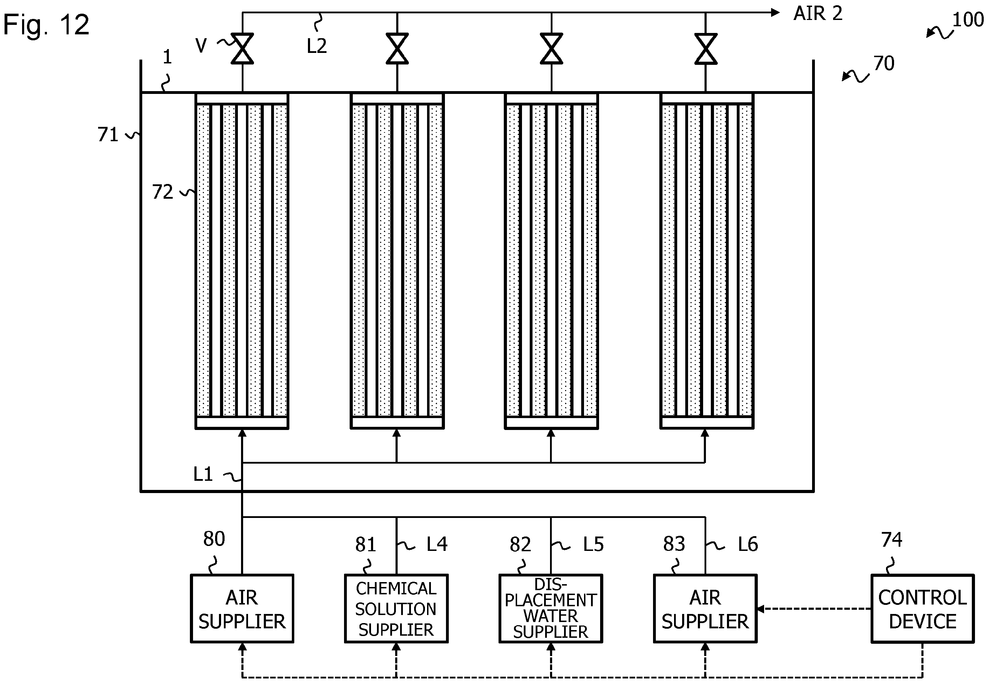

Next, a method for cleaning the organic waste water treatment apparatus 100 according to the first embodiment will be described. Figs. 12 to 16 are diagrams for explaining the method for cleaning the organic waste water treatment apparatus 100 according to the first embodiment.

The organic waste water treatment apparatus 100 includes, for example, a chemical solution supplier 81, a displacement water supplier 82, and an air supplier 83 (hereinafter, also simply referred to as a supplier 83) in addition to the supplier 80 as illustrated in Fig. 12. Also, the line L2 is provided with a plurality of valves V, for example, as illustrated in Fig. 12. Note that illustration of the scouring device 73 and the line L3 is omitted in the example illustrated in Fig. 12. Also, although the case where the membrane supports 72 (units UN1) described in Fig. 10 are arranged in the reaction tank 70 will be described below, the membrane supports 72 (units UN2) described in Fig. 11 may be disposed inside the reaction tank 70.

The chemical solution supplier 81 supplies a chemical solution to clean the plurality of holes h1 from the lower end portions 72c of the membrane supports 72 to the inside of the membrane supports 72, for example. The chemical solution supplied by the chemical solution supplier 81 is a chemical solution to remove substances (for example, substances that may cause fouling) adhering to the plurality of holes h1 from the plurality of holes h1 and may be a hypochlorous acid (from about 300 (ppm) to 3000 (ppm), for example), hydrogen peroxide, or the like.

Specifically, the chemical solution supplier 81 may include, for example, a storage tank (not illustrated) that stores the chemical solution and a pump (not illustrated) that pushes the chemical solution into the membrane supports 72 via a line L4 and the line L1. The line L4 is a pipe that couples the chemical solution supplier 81 to the upstream side of each unit UN1 in the line L1, for example.

The displacement water supplier 82 supplies displacement water (hereinafter, also simply referred to as liquid) to be replaced with the chemical solution (the chemical solution supplied by the chemical solution supplier 81) remaining in the plurality of holes h1 from the lower end portions 72c of the membrane supports 72 to the inside of the membrane supports 72, for example.

Specifically, the displacement water supplier 82 may include, for example, a pump (not illustrated) that pushes the displacement water into the membrane supports 72 via a line L5 and the line L1. The line L5 is a pipe that couples the displacement water supplier 82 to the upstream side of each unit UN1 in the line L1, for example.

The supplier 83 is, for example, an air blower such as a ventilator or an air fan and supplies air to be replaced with the chemical solution remaining in the plurality of holes h1 (hereinafter, also referred to as displacement air or first gas) from the lower end portions 72c of the membrane supports 72 to into the membrane supports 72. Also, the supplier 83 supplies air to perform drying treatment on the plurality of holes h1 (hereinafter, also referred to as drying air or second gas) from the lower end portions 72c of the membrane supports 72 into the membrane supports 72, for example. The drying treatment is treatment to recover hydrophobicity of each of the plurality of holes h1, for example. Note that although the following description will be given on the assumption that the displacement air and the drying air are supplied from the supplier 83, the displacement air and the drying air may be supplied from different suppliers, respectively, for example. Also, although the following description will be given on the assumption that the supplier 80 and the supplier 83 are different suppliers, the supplier 80 and the supplier 83 may be the same supplier, for example.

Specifically, the supplier 83 supplies air into the membrane supports 72 via a line L6 and the line L1, for example. The line L6 is a pipe that couples the supplier 83 to the upstream side of each unit UN1 in the line L1, for example.

The control device 74 performs treatment (hereinafter, also referred to as cleaning control treatment) of controlling a timing at which the plurality of holes h1 in the membrane supports 72 are cleaned (hereinafter, also referred to as a cleaning timing) through cooperation of a program stored in the storage device (not illustrated) and the CPU, for example.

Specifically, the control device 74 controls a timing at which the chemical solution supplier 81 supplies the chemical solution, a timing at which the displacement water supplier 82 supplies the displacement water, a timing at which the supplier 83 supplies air, and a timing at which opening/closing control of the plurality of valves V provided in the line L2 is performed, for example, as will be described later.

Note that although a case where the cleaning control treatment is automatically performed by the control device 74 will be described below, at least a part of the cleaning control treatment may be manually performed by an operator, for example. In other words, the operator may manually perform at least any one of the supply of the chemical solution by the chemical solution supplier 81, the supply of the displacement water by the displacement water supplier 82, the supply of air by the supplier 83, and the opening/closing control of the plurality of valves V, for example, in this case.

### [Specific example of cleaning control treatment]

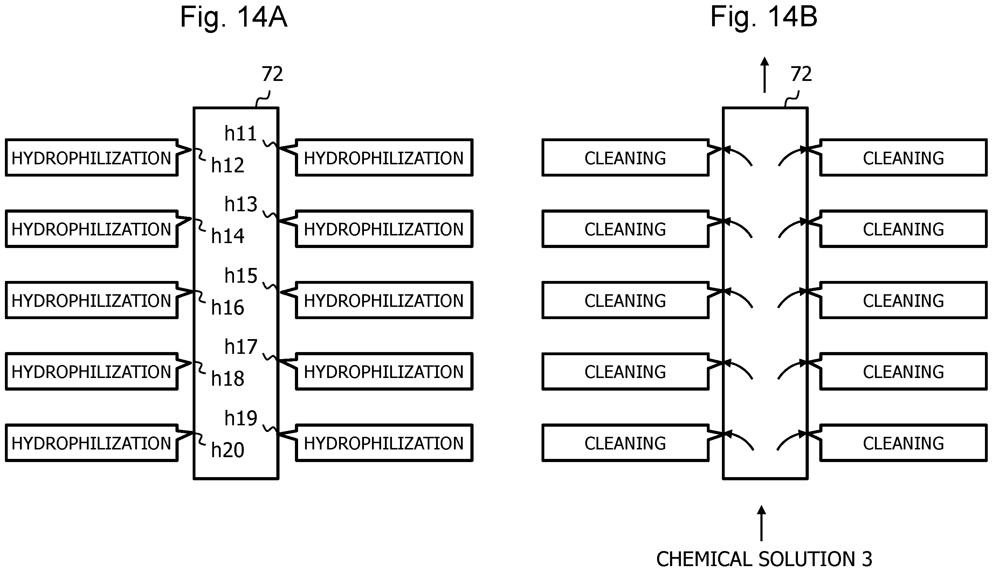

Next, a specific example of the cleaning control treatment will be described. Hereinafter, description will be given on the assumption that a hole h11, a hole h12, a hole h13, a hole h14, a hole h15, a hole h16, a hole h17, a hole h18, a hole h19, and a hole h20 are provided as the plurality of holes h1 in the membrane supports 72 in Figs. 14 to 16. Also, the following description will be given on the assumption that each of the hole h11, the hole h12, the hole h13, the hole h14, the hole h15, the hole h16, the hole h17, the hole h18, the hole h19, and the hole h20 is hydrophilized with the waste water 1 inside the reaction tank 70 as illustrated in Fig. 14(A).

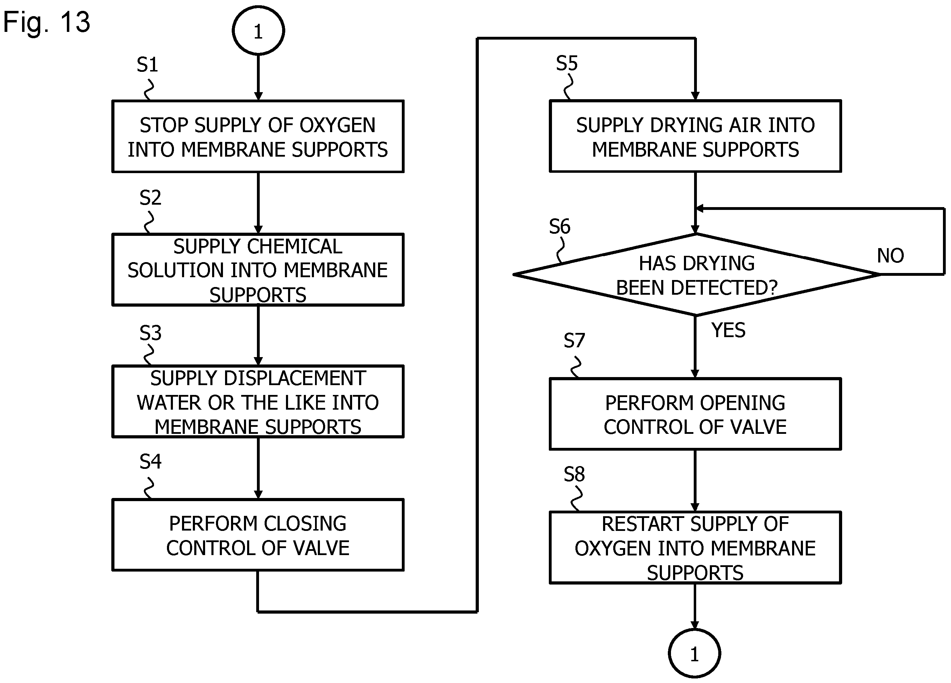

First, the control device 74 stops supplying of the air 2 (the air 2 including oxygen) into the membrane supports 72, for example (Step S1 in Fig. 13). In other words, the control device 74 suspends the ordinary operation described in Fig. 4 and the like (the operation to form the biofilms R1 on the outer peripheries of the membrane supports 72) in this case. Specifically, the control device 74 controls the supplier 80 such that the supply of the air 2 into the membrane supports 72 is stopped, for example. Note that the control device 74 may perform the treatment in Step S1 and the subsequent steps at a timing at which the plurality of holes h1 are hydrophilized with the waste water 1 inside the reaction tank 70 (a timing at an interval of one to two months, for example), for example.

Then, the control device 74 supplies the chemical solution 3 into the membrane supports 72, for example (Step S2 in Fig. 13). Specifically, the control device 74 controls the chemical solution supplier 81 to supply the chemical solution 3 into the membrane supports 72, for example. Note that a pushing pressure of the chemical solution 3 into the membrane supports 72 may be a pressure that is similar to the atmospheric pressure, for example.

In other words, in the case where the chemical solution 3 is pushed into the membrane supports 72, at least a part of the chemical solution 3 pushed into the membrane supports 72 is shifted from the inside of the membrane supports 72 to the side of the reaction tank 70 via the plurality of holes h1. Therefore, the organic waste water treatment apparatus 100 can clean the inside of the plurality of holes h1 by pushing the chemical solution 3 into the membrane supports 72 as illustrated in Fig. 14(B). Specifically, the organic waste water treatment apparatus 100 can remove substances (substances that may cause fouling, for example) adhering to each of the plurality of holes h1, for example, in this case.

Next, the control device 74 supplies displacement water 4a or the displacement air 4b to the membrane supports 72 after elapse of a predetermined time period after the treatment in Step S2 is performed, for example (Step S3 in Fig. 13). Specifically, the control device 74 controls the displacement water supplier 82 to supply the displacement water 4a into the membrane supports 72, for example. Also, the control device 74 controls the supplier 83 to supply the displacement air 4b into the membrane supports 72, for example. Note that the predetermined time period described here may be a time required to clean the plurality of holes h1 and may be a time period of about 20 to 60 minutes, for example. Moreover, the pushing pressure of the displacement water 4a or the displacement air 4b into the membrane supports 72 may be, for example, a pressure that is similar to the atmospheric pressure.

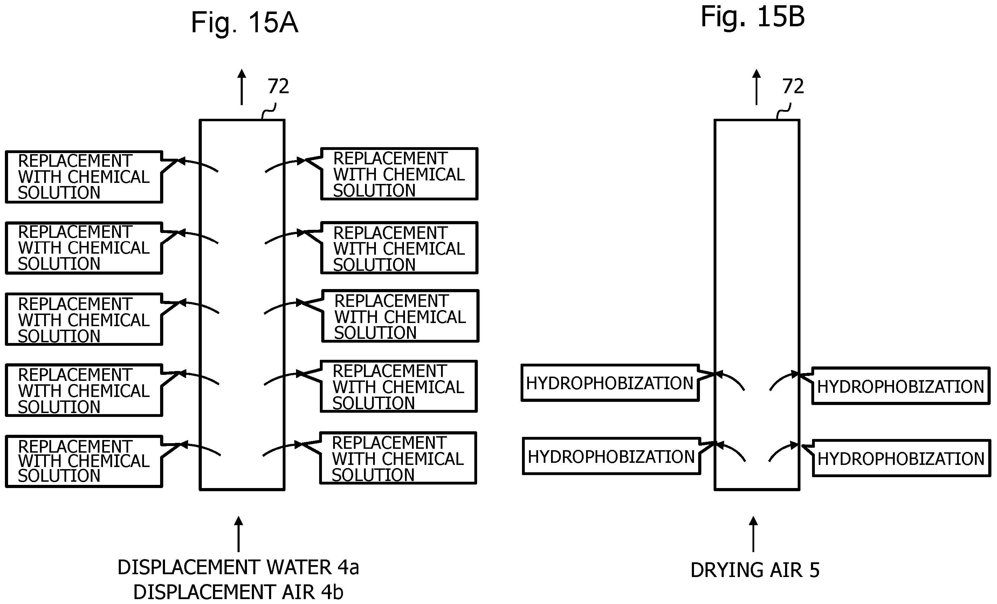

In other words, in the case where the chemical solution 3 is supplied into the plurality of holes h1 and cleaning is performed, the chemical solution 3 used for the cleaning may remain inside each of the plurality of holes h1. Therefore, the chemical solution remaining inside the plurality of holes h1 is pressed out into the reaction tank 70 and the chemical solution 3 remaining inside the plurality of holes h1 is replaced with the displacement water 4a or the displacement air 4b by supplying the displacement water 4a or the displacement air 4b, for example, as illustrated in Fig. 15(A) after the cleaning of the inside of the plurality of holes h1 is performed in the organic waste water treatment apparatus 100.

Subsequently, the control device 74 performs closing control of the plurality of valves V after elapse of a predetermined time period after the treatment in Step S3 is performed, for example (Step S4 in Fig. 13). The closing control of the plurality of valves V is control of lowering a degree of opening of the plurality of valves V. Then, the control device 74 supplies drying air 5 to the membrane supports 72 after the treatment in Step S4, for example (Step S5 in Fig. 13). Note that the drying air 5 may be, for example, warmed air warmed by a heater or the like, which is not illustrated. Specifically, the drying air 5 may be warmed air warmed to about 70°C, for example.

In other words, the control device 74 performs closing control of the plurality of valves V to pressurize the inside of the membrane supports 72 by suppressing the amount of air to be discharged from the upper end portions 72d of the membrane supports 72 to the outside via the line L2, for example. Specifically, the control device 74 performs closing control of the plurality of valves V such that the pressure inside the membrane supports 72 is equal to or greater than the atmospheric pressure and equal to or less than a water pressure inside the reaction tank 70, for example. Thereafter, the control device 74 controls the supplier 83 to supply the drying air 5 into the membrane supports 72, for example. Note that the predetermined time period described here may be a time required to replace the displacement water 4a supplied from the displacement water supplier 82 or the displacement air 4b supplied from the supplier 83 with the chemical solution 3 remaining in the plurality of holes h1, and may be, for example, a time of about 20 to 60 minutes.

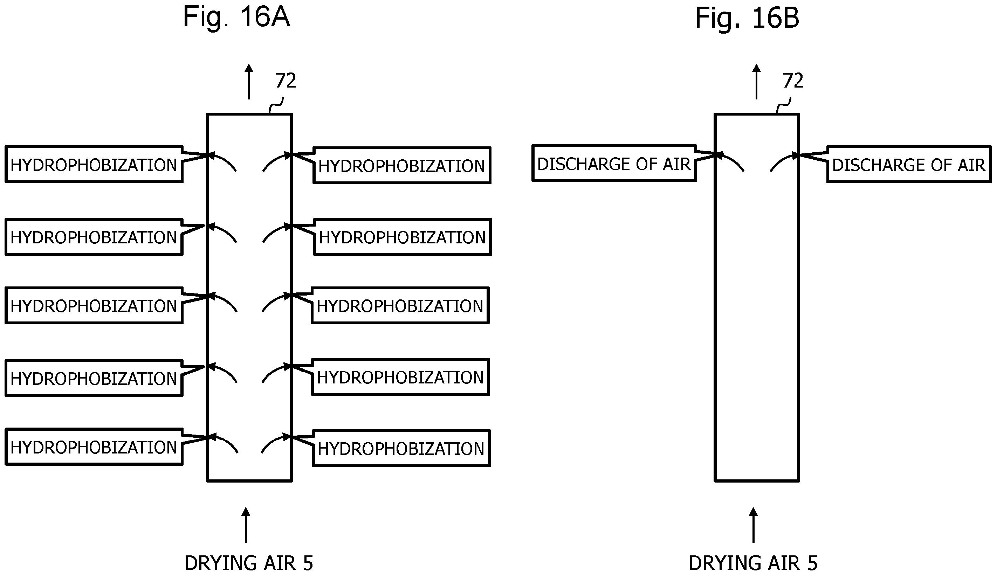

Then, the drying air 5 is pushed in order from the plurality of holes h1 on the side of the lower end portions 72c with a start of supply of the drying air 5 from the side of the lower end portions 72c of the membrane supports 72 as illustrated in Fig. 15(B) in this case inside the membrane supports 72. In other words, the drying treatment is performed in order from the plurality of holes h1 on the side of the lower end portions 72c inside the membrane supports 72, and hydrophobicity is recovered. Thereafter, the drying treatment is performed in the plurality of holes h1 on the side of the upper end portions 72d, for example, as illustrated in Fig. 16(A) inside the membrane supports 72, and hydrophobicity of the plurality of holes h1 provided at each position of the membrane supports 72 is recovered.

Subsequently, the control device 74 waits until completion of the drying treatment on the plurality of holes h1 in the membrane supports 72 is detected, for example (NO in Step S6 in Fig. 13).

Specifically, the control device 74 controls the supplier 73a described in Fig. 9 to supply the compressed air stored in the air tank 73b described in Fig. 9 into the membrane supports 72 at a predetermined timing after the start of execution of the treatment in Step S5, for example. The predetermined timing described here may be a periodic timing such as every 1 minute, for example. More specifically, the control device 74 performs control such that the air pushing pressure into the membrane supports 72 temporarily becomes equal to or greater than the water pressure by temporarily supplying the compressed air by the supplier 73a instead of the supply of the drying air 5 by the supplier 83 at the predetermined timing arrives, for example. Then, the control device 74 determines whether or not the compressed air is to be discharged (jetted) as air bubbles from the plurality of holes h1 near the upper end portions 72d of the membrane supports 72 (that is, the plurality of holes h1 provided at positions where the water pressure is low) to the side of the reaction tank 70 with the supply of the compressed air by the supplier 73a, for example.

In other words, in the case where the drying treatment (recovery of hydrophobicity) on the plurality of holes h1 provided in the membrane supports 72 is completed, the compressed air pushed into the membrane supports 72 with the pushing pressure that is equal to or greater than the water pressure is discharged from the plurality of holes h1 provided at positions where the water pressure is low. In other words, in the case where the compressed air is discharged from the plurality of holes h1, it is possible to determine that the drying treatment on the plurality of holes h1 has been completed. Therefore, the control device 74 periodically determines whether or not the compressed air is being discharged from the plurality of holes h1 by periodically supplying the compressed air by the supplier 73a after the start of execution of the treatment in Step S5, for example. Then, the control device 74 determines that the drying treatment on the plurality of holes h1 has been completed in a case where it is determined that the compressed air is being discharged from the plurality of holes h1, for example.

In this manner, the control device 74 can suppress the amount of consumed power while determining whether or not the drying treatment on the plurality of holes h1 has been completed by limiting the time to perform control such that the pushing pressure into the membrane supports 72 becomes equal to or greater than the water pressure, for example.

In addition, whether or not the compressed air is discharged (jetted) as air bubbles from the plurality of holes h1 near the lower end portions 72c of the membrane supports 72 (that is, the plurality of holes h1 provided at positions where the water pressure is high) to the side of the reaction tank 70 may be determined. In this case, the pressure of the compressed air needs to be a pressure that is equal to or greater than the water pressure near the lower end portions 72c of the membrane supports 72 (that is, the pressure that is equal to or greater than the water pressure near the lower end portions 72c of the membrane supports 72). In a case where such determination is performed, a pressure that is equal to or greater than the water pressure near the lower end portions 72c of the membrane supports 72 may be applied at a predetermined time interval while the drying air is supplied, and whether or not the compressed air is discharged (jetted) as air bubbles to the side of the reaction tank 70 may be determined since the amount of consumed power increases if such determination is made and the pressure that is equal to or greater than the water pressure near the lower end portions 72c of the membrane supports 72 is constantly applied.

Note that the determination regarding whether or not the compressed air is being discharged from the plurality of holes h1 may be manually performed by the operator, for example. Then, the control device 74 may determine that the drying treatment on the plurality of holes h1 has been completed in a case where the operator inputs information indicating that the drying treatment on the plurality of holes h1 has been completed, for example.

Also, the control device 74 may be adapted to determine whether or not the drying treatment on the plurality of holes h1 has been completed by controlling the supplier 83 such that the pushing pressure of the drying air 5 into the membrane supports 72 becomes equal to or greater than the water pressure without performing switching from the supply of the drying air 5 by the supplier 83 to the supply of the compressed air by the supplier 73a, for example.

Also, in a case where the discharge of the compressed air from the plurality of holes h1 near the upper end portions 72d of the membrane supports 72 is started, the pushing pressure of the compressed air into the membrane supports 72 decreases in the reaction tank 70. Therefore, the control device 74 may determine that the drying treatment on the plurality of holes h1 has been completed in a case where a decrease of the pushing pressure of the compressed air into the membrane supports 72 below a prescribed threshold value is detected, for example. Specifically, the control device 74 may refer to measurement equipment (not illustrated) adapted to measure the pushing pressure of the compressed air into the membrane supports 72 and determine that the drying treatment on the plurality of holes h1 has been completed in a case where the pushing pressure measured by the measuring equipment decreases below the prescribed threshold value, for example.

Also, an imaging device such as a camera may be provided at an upper portion of the reaction tank 70, and the inside of the reaction tank 70 may be imaged as a still image or a moving image. Then, the control device 74 may analyze the still image or the moving image using an image recognition means and determine whether or not air bubbles are being discharged from the plurality of holes h1, for example. The control device 74 determines that the drying treatment on the plurality of holes h1 has been completed once it is determined that air bubbles are being discharged, for example, in this case.

Returning to Fig. 13, in a case where completion of the drying treatment on the plurality of holes h1 of the membrane supports 72 is detected (YES in Step S6), the control device 74 performs opening control of the plurality of valves V, for example (Step S7 in Fig. 13). The opening control of the plurality of valves V is control of raising the degree of opening of the plurality of valves V. Specifically, the opening control of the plurality of valves V may be control of raising the degree of opening of the plurality of valves V such that the degree of opening of the plurality of valves V becomes similar to the degree of opening when Step S2 and Step S3 are performed, for example.

Note that the control device 74 may perform the determination regarding whether or not the drying treatment on the plurality of holes h1 has been completed for each unit UN1, for example. Then, in response to detection of presence of the unit UN1 including the membrane supports 72 for which the drying treatment on the plurality of holes h1 has been completed, the control device 74 may perform opening control of the valve V corresponding to the detected unit UN1 (the valve V that controls the amount of drying air 5 to be discharged from the detected unit UN1), for example.

Thereafter, the control device 74 restarts the supply of the air 2 into the membrane supports 72, for example (Step S8 in Fig. 13). In other words, the control device 74 restarts the ordinary operation (the operation to form the biofilms R1 on the outer peripheries of the membrane supports 72) described in Fig. 4 and the like. Specifically, the control device 74 controls the supplier 80 to restart the supply of the air 2 into the membrane supports 72, for example.

In this manner, according to the method for cleaning the organic waste water treatment apparatus 100 in the present embodiment, the supply of the air 2 into the membrane supports 72 is stopped, and the chemical solution 3 is supplied from the first part of the membrane supports 72 into the membrane supports 72, for example. The first part is also called a first end portion and is, for example, the lower end portions 72c or the both end portions 72f. Also, according to the method for cleaning the organic waste water treatment apparatus 100, liquid (for example, the displacement water 4a) or first gas (for example, the displacement air 4b) is supplied from the first part into the membrane supports 72, the degree of opening of the valves V that control the amount of air to be discharged from the second part of the membrane supports 72 is lowered, and second gas (for example, the drying air 5) is supplied from the first part into the membrane supports 72. The second part is, for example, the upper end portions 72d or the curved portion 72e and is also called a second end portion.

Then, according to the method for cleaning the organic waste water treatment apparatus 100, the degree of opening of the valve V is raised, and the supply of the air 2 to the membrane supports 72 is restarted, in response to discharge of the drying air 5 or the compressed air from at least any of the plurality of holes h1 toward the side of the reaction tank 70, for example.

Also, according to the method for cleaning the organic waste water treatment apparatus 100 in the present embodiment, the membrane supports 72 include hydrophobic hollow fiber membranes, and the chemical solution 3 is a chemical solution that removes substances adhering to the plurality of holes h1 from the plurality of holes h1, for example. Then, according to the method for cleaning the organic waste water treatment apparatus 100, the chemical solution 3 inside the plurality of holes h1 is discharged into the reaction tank 70 by supplying the displacement water 4a or the displacement air 4b into the membrane supports 72, and the inside of the plurality of holes h1 is dried and the hydrophobicity of the hollow fiber membranes is recovered by supplying the drying air 5 into the membrane supports 72, for example.

Also, the shape of the membrane supports 72 according to the present embodiment is a pipe shape that extends along the axis (hereinafter, also simply referred to as a vertical axis) of the reaction tank 70 in the vertical direction and has the lower end portions 72c and the upper end portions 72d that are at least partially open toward the outside of the membrane supports 72, the lower end portions 72c are end portions on the lower side of the vertical axis, and the upper end portions 72d are end portions on the upper side of the vertical axis.

Also, the shape of the membrane supports 72 according to the present embodiment is a pipe shape including the both end portions 72f that are at least partially open toward the outside of the membrane supports 72, for example, and each membrane supports 72 includes the curved portion 72e obtained by curving the membrane support 72 such that the both end portions 72f face downward in the vertical axis of the reaction tank 70. Also, according to the method for cleaning the organic waste water treatment apparatus 100 in the present embodiment, the chemical solution 3 is supplied from each of the both end portions 72f into the membrane supports 72, the displacement water 4a or the displacement air 4b is supplied from each of the both end portions 72f into the membrane supports 72, the degree of opening of the valve V that controls the amount of air to be discharged from the curved portion 72e is lowered, and the drying air 5 is supplied from each of both the end portions 72f into the membrane support 72, for example, in this case.

Furthermore, the method for cleaning the organic waste water treatment apparatus 100 in the present embodiment is performed in a state where the waste water 1 inside the reaction tank 70 is in contact with at least a part of the outer surface of the membrane supports 72, for example.

In this manner, according to the method for cleaning the organic waste water treatment apparatus 100 in the present embodiment, it is possible to recover hydrophobicity of the plurality of holes h1 even in a case where the plurality of holes h1 in the membrane supports 72 are hydrophilized, for example. Therefore, the organic waste water treatment apparatus 100 can restart the ordinary operation even in a case where the plurality of holes h1 in the membrane supports 72 are hydrophilized, for example, and can extend a period during which the ordinary operation can be performed.

Note that according to the organic waste water treatment apparatus 100 in the present embodiment, the supplier 83 can also push the drying air 5 from the upper end portions 72d into the membrane supports 72. However, the water pressure near the upper end portions 72d of the membrane supports 72 is lower than the water pressure near the lower end portions 72c of the membrane supports 72. Therefore, the drying air 5 may be discharged from the plurality of holes h1 near the upper end portions 72d for which the drying treatment has been completed in a stage where the drying treatment on the plurality of holes h1 near the upper end portions 72d has been completed, and the drying treatment on the plurality of holes h1 near the lower end portions 72c may not be performed in this case in the membrane supports 72. Therefore, the supplier 83 preferably pushes the drying air 5 from the lower end portions 72c into the membrane supports 72 in the organic waste water treatment apparatus 100 according to the present embodiment.

### REFERENCE SIGNS LIST

- 1: Waste water
- 2: Air
- 3: Chemical solution
- 4a: Displacement water
- 4b: Displacement air
- 5: Drying air
- 10: Primary settling tank
- 20: Reaction tank
- 21: Tank main body
- 22: Air supply pipe
- 30: Secondary settling tank
- 40: Air supplier (supplier)
- 50: Solid-liquid separation tank
- 51: Tank main body
- 52: Air supply pipe
- 53: Separation membrane
- 60: Air supplier (supplier)
- 70: Reaction tank
- 71: Tank main body
- 72: Membrane support
- 72a: First mold portion
- 72a1: First air hole
- 72b: Second mold portion
- 72b1: Second air hole
- 72c: Lower end portion
- 72d: Upper end portion
- 72e: Curved portion
- 72f: Both end portions
- 73: Scouring device
- 73a: Air supplier (supplier)
- 73b: Air tank
- 74: Control device
- 80: Air supplier (supplier)
- 90: Solid-liquid separation device
- 100: Organic waste water treatment apparatus
- 800: Organic waste water treatment apparatus
- 900: Organic waste water treatment apparatus
- h1: Hole
- h2: Hole
- h3: Hole
- L1: Line
- L2: Line
- L3: Line
- R1: Biofilm (Aerobic layer)
- R2: Oxygen-free layer
- R3: Anaerobic layer
- UN1: Unit
- UN2: Unit

## Claims

1. A method for cleaning an organic waste water treatment apparatus including a tank and a supplier that supplies at least oxygen, the tank including a pipe-shaped membrane support that allows molecular diffusion of the oxygen supplied by the supplier into the tank via a plurality of holes, the method comprising:
stopping the supply of the oxygen to the membrane support;
supplying a chemical solution from a first portion of the membrane support to inside of the membrane support;
supplying a liquid or a first gas from the first portion to the inside of the membrane support;
reducing a degree of opening of a valve that controls an amount of gas to be discharged from a second portion of the membrane support; and
supplying a second gas from the first portion to the inside of the membrane support.

2. The method for cleaning an organic waste water treatment apparatus according to claim 1, wherein
the membrane support includes a hydrophobic hollow fiber membrane, the chemical solution is a chemical solution that removes, from the plurality of holes, substances adhering to the plurality of holes,
the supplying the liquid or the first gas includes discharging the chemical solution inside the plurality of holes to inside of the tank by supplying the liquid or the first gas to the inside of the membrane support, and
the supplying the second gas includes drying the inside of the plurality of holes and recovering hydrophobicity of the hollow fiber membrane by supplying the second gas to the inside of the membrane support.

3. The method for cleaning an organic waste water treatment apparatus according to claim 1, wherein
a shape of the membrane support is a pipe shape that extends along a vertical axis of the tank and includes a first end portion and a second end portion that are at least partially open toward outside of the membrane support,
the first end portion is an end portion on a lower side in the vertical axis,
the second end portion is an end portion on an upper side in the vertical axis,
the first portion is the first end portion, and
the second portion is the second end portion.

4. The method for cleaning an organic waste water treatment apparatus according to claim 1, wherein
a shape of the membrane support is a pipe shape that includes both end portions that are at least partially open toward outside of the membrane support,
the membrane support includes a curved portion obtained by curving the membrane support such that each of the both end portions faces down in a vertical axis of the tank,
the first portion is each of the both end portions, and
the second portion is the curved portion.

5. The method for cleaning an organic waste water treatment apparatus according to claim 1, further comprising:
increasing the degree of opening of the valve in response to discharge of the second gas from at least any of the plurality of holes to a side of the tank, and
restarting the supply of the oxygen to the membrane support.

6. The method for cleaning an organic waste water treatment apparatus according to claim 1, wherein the stopping of the supply of the oxygen, the supplying of the chemical solution, the supplying of the liquid or the first gas, the reducing of the degree of opening of the valve, and the supplying of the second gas are performed in a state where liquid in the tank is in contact with at least a part of an outer surface of the membrane support.

7. The method for cleaning an organic waste water treatment apparatus according to claim 1, wherein the oxygen is oxygen obtained through water electrolysis using renewable energy.
